# FASCICULE DE BREVET EUROPEEN

(11) **EP 4 402 001 B1**
(45) Date de publication et mention de la délivrance du brevet: **01.10.2025**
(21) Numéro de dépôt: 22760942.7
(22) Date de dépôt: 03.08.2022
(51) Int. Cl.: B60K 37/00, B60R 13/02, B60R 13/00, B60K 35/50, B60K 37/20

(54) **BANDEAU DE COIFFE MONOBLOC ET PROCÉDÉ D'ASSEMBLAGE**
EINTEILIGER ABDECKSTREIFEN UND ZUSAMMENBAUVERFAHREN
ONE-PIECE COVER STRIP AND ASSEMBLY METHOD

(30) Priorité: 14.09.2021 FR 2109622
(43) Date de publication de la demande: 24.07.2024
(73) Titulaire: Renault s.a.s, 78084 Guyancourt Guyancourt (FR)
(72) Inventeur: CHAPUIS, Claude-Emman, 78280 GUYANCOURT (FR); DAGOREAU, Alain, 78280 Guyancourt (FR); MARCEAU, Thierry, 78280 Guyancourt (FR)
(86) Numéro de dépôt international: PCT/EP2022/071855
(87) Numéro de publication internationale: WO 2023/041245

(56) Documents cités:
- DE-A1- 19 724 600
- FR-A1- 2 894 556
- FR-A1- 3 056 182

## Description

### Domaine technique de l'invention

L'invention concerne un bandeau de coiffe s'étendant d'un côté à l'autre d'un habitacle d'un véhicule. L'invention porte encore sur un agencement comprenant un tel bandeau de coiffe. L'invention porte encore sur une planche de bord comprenant un tel agencement. L'invention porte encore sur un véhicule comprenant une telle planche de bord ou un tel agencement ou un tel bandeau de coiffe. L'invention porte encore sur un procédé d'assemblage d'un tel agencement.

### Etat de la technique antérieure

Un véhicule automobile comprend généralement une planche de bord s'étendant sensiblement à l'aplomb d'un pare-brise. Une telle planche de bord comprend généralement une coiffe sensiblement au-dessus du tableau de bord côté conducteur et sensiblement au-dessus d'une boîte à gants ou vide poche côté passager. La planche de bord comprend encore, vers l'avant du véhicule, un plastron s'étendant de part et d'autre de l'habitacle, de gauche à droite, et jusqu'à la base du pare-brise.

Généralement, un bandeau de coiffe est positionné entre la coiffe et le plastron. Un tel bandeau de coiffe comprend plusieurs parties. En effet, le bandeau de coiffe s'étend sensiblement d'une porte avant gauche jusqu'à une porte avant droite en formant sensiblement un arc de cercle. Ainsi, une première partie du bandeau de coiffe s'étend sur une première moitié de la largeur du véhicule (par exemple côté conducteur) tandis qu'une seconde partie du bandeau de coiffe s'étend sur une deuxième moitié de la largeur du véhicule (par exemple côté passager). Une jonction entre la première partie et la deuxième partie du bandeau de coiffe, de préférence centrée ou sensiblement centrée sur un plan médian vertical et longitudinal du véhicule, assure la finition à ce niveau.

Cependant, une telle jonction empêche d'obtenir une continuité esthétique entre la première partie et la deuxième partie du bandeau de coiffe. C'est d'autant plus gênant que cette jonction est visible par le conducteur et/ou le passager avant du véhicule.

FR 3 056 182 A1 divulgue un habitacle intérieur d'un véhicule, comprenant une planche de bord portant une coiffe, et un plastron, la planche de bord et la coiffe s'étendant sur toute la largeur du véhicule.

FR 2 894 556 A1 divulgue un élément de planche de bord d'automobile à plastron et coiffe.

DE 197 24 600 A1 divulgue un tableau de bord de véhicule automobile avec un bandeau décoratif s'étendant horizontalement sur celui-ci.

### Présentation de l'invention

Le but de l'invention est de fournir un bandeau de coiffe remédiant aux inconvénients ci-dessus. En particulier, l'invention propose une solution permettant d'assurer un alignement précis des extrémités du bandeau de coiffe avec les bandeaux de portes avant droite et gauche.

### Résumé de l'invention

Pour atteindre cet objectif l'invention porte sur un bandeau de coiffe pour véhicule, notamment pour véhicule automobile, destiné à s'étendre d'un côté à l'autre de l'habitacle d'un tel véhicule entre une coiffe et un plastron, le bandeau de coiffe étant monobloc.

Le bandeau de coiffe peut être élastiquement déformable.

Le bandeau de coiffe peut comprendre un moyen de fixation sur un tel plastron.

Le bandeau de coiffe peut comprendre un premier moyen de positionnement par rapport à un tel plastron, notamment au niveau de chaque extrémité latérale du bandeau de coiffe, et un deuxième moyen de positionnement par rapport à un tel plastron, notamment de part et d'autre du centre ou sensiblement du centre du bandeau de coiffe.

L'invention porte encore sur un agencement comprenant un bandeau de coiffe tel que défini précédemment, l'agencement comprenant un plastron comprenant un premier moyen de coopération avec le premier moyen de positionnement et un deuxième moyen de coopération avec le deuxième moyen de positionnement.

L'invention porte encore sur une planche de bord pour habitacle de véhicule, notamment de véhicule automobile, comprenant :
- une coiffe,
- un agencement tel que défini précédemment,
le bandeau de coiffe s'étendant, ou s'étendant sensiblement, entre la coiffe et le plastron.

La coiffe peut être revêtue d'une peau.

La planche de bord peut comprendre un élément de maintien de la peau de la coiffe de sorte à appuyer sur la peau.

L'élément de maintien peut être obtenu par moulage, notamment par moulage de plusieurs portions suivi de la fixation des portions ensemble.

L'invention porte encore sur un véhicule, notamment un véhicule automobile, comprenant un bandeau de coiffe tel que défini précédemment, ou un agencement tel que défini précédemment, ou une planche de bord telle que définie précédemment.

L'invention porte encore sur un procédé d'assemblage d'un agencement tel que défini précédemment, le procédé comprenant :
- une étape de fourniture d'un bandeau de coiffe,
- une étape de fourniture d'un plastron,
- une étape de positionnement du bandeau de coiffe par rapport au plastron via le premier moyen de coopération et le premier moyen de positionnement au niveau de chaque extrémité du bandeau de coiffe,
- une étape de déformation du bandeau de coiffe de sorte à positionner le bandeau de coiffe par rapport au plastron via le deuxième moyen de coopération et le deuxième moyen de positionnement de part et d'autre du centre ou sensiblement du centre du bandeau de coiffe,
- une étape de fixation du bandeau de coiffe sur le plastron, notamment par rivetage, notamment par bouterollage à chaud.

### Présentation des figures

Ces objets, caractéristiques et avantages de la présente invention seront exposés en détail dans la description suivante d'un mode de réalisation et d'un mode d'exécution d'un procédé d'assemblage d'un agencement, faite à titre non-limitatif en relation avec les figures jointes parmi lesquelles :
[Fig. 1] La figure 1 est une vue schématique d'un véhicule automobile selon un mode de réalisation.
[Fig. 2] La figure 2 est une vue en perspective partielle d'une planche de bord selon un mode de réalisation.
[Fig. 3] La figure 3 est une vue en coupe selon un plan vertical et longitudinal de la planche de bord selon le mode de réalisation.
[Fig. 4] La figure 4 est une autre vue en coupe selon un autre plan vertical et longitudinal de la planche de bord selon le mode de réalisation.
[Fig. 5] La figure 5 est une vue de dessous d'un bandeau de coiffe selon un mode de réalisation.
[Fig. 6] La figure 6 est une vue de dessous d'un agencement selon un mode de réalisation.
[Fig. 7] La figure 7 est une vue de dessus de la planche de bord selon un mode de réalisation.
[Fig. 8] La figure 8 est une vue de dessus d'un élément de maintien selon un mode de réalisation.
[Fig. 9] La figure 9 est une vue en perspective de l'élément de maintien selon le mode de réalisation.
[Fig. 10] La figure 10 est une vue de détail en coupe d'un premier moyen de positionnement du bandeau de coiffe et d'un premier moyen de coopération d'un plastron selon un mode de réalisation.
[Fig. 11] La figure 11 est une vue de détail de dessous d'un deuxième moyen de positionnement du bandeau de coiffe et d'un deuxième moyen de coopération du plastron selon le mode de réalisation.

### Description détaillée

La direction selon laquelle un véhicule, notamment un véhicule automobile, se déplace en ligne droite est définie comme étant la direction longitudinale X. Par convention, la direction perpendiculaire à la direction longitudinale, située dans un plan parallèle au sol, est nommée direction transversale Y. La troisième direction, perpendiculaire aux deux autres, est nommée direction verticale Z. Ainsi, on utilise un repère direct XYZ dans lequel X est la direction longitudinale dans le sens avant-arrière du véhicule, donc dirigée vers l'arrière, Y est la direction transversale dirigée vers la droite et Z est la direction verticale dirigée vers le haut. Le sens avant correspond au sens dans lequel le véhicule se déplace habituellement dans la direction longitudinale et est opposé au sens arrière.

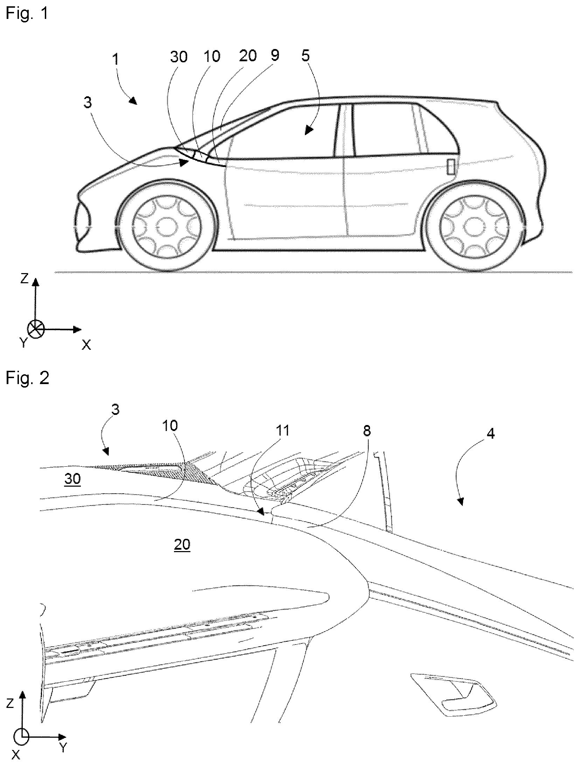

La figure 1 illustre schématiquement un véhicule 1, de préférence un véhicule automobile.

Le véhicule comprend une planche de bord 3 au sein d'un habitacle 5 du véhicule.

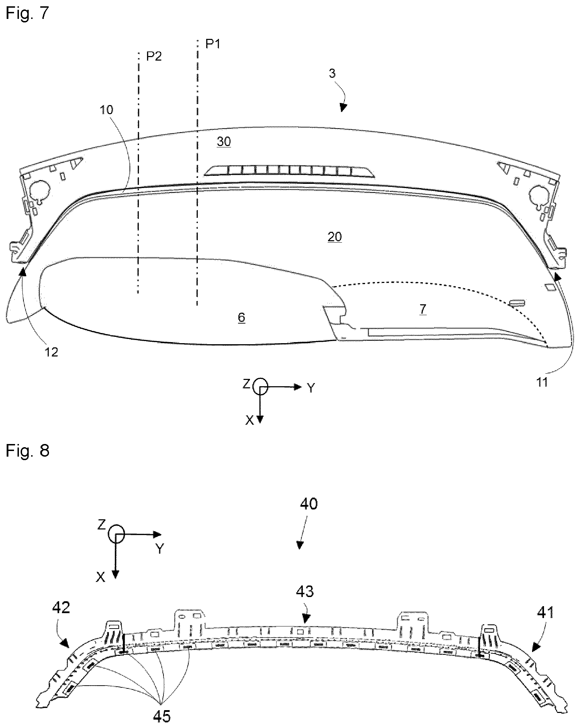

La planche de bord 3 comprend une coiffe 20, illustrée notamment sur la figure 7.

Par « coiffe », on entend un habillage s'étendant, ou s'étendant sensiblement, au-dessus d'un tableau de bord 6 agencé côté conducteur, et/ou au-dessus d'une boîte à gants et/ou d'un vide poche 7 côté passager. Une telle coiffe est par exemple obtenue par moulage d'une matière plastique ou par compression, ou par un procédé conférant des propriétés semblables. Ainsi la coiffe 20 s'étend transversalement au sein de l'habitacle 5 de sorte à habiller le dessus du tableau de bord et/ou le dessus de la boîte à gants ou vide poche depuis, ou sensiblement depuis, une porte avant gauche (non illustrée) jusqu'à une porte avant droite 4 (figure 2). En outre, la coiffe 20 s'étend vers l'avant du véhicule. La coiffe occupe de préférence toute la dimension transversale de l'habitacle à ce niveau ou sensiblement à ce niveau.

A noter que la figure 7 illustre un véhicule équipé d'un poste de conduite agencé à gauche. Alternativement, en cas de poste de conduite agencé à droite, le tableau de bord est à droite et la boîte à gants et/ou vide poche est à gauche.

Alternativement, le poste de conduite peut être centré ou sensiblement centré selon la direction transversale du véhicule. Dans ce cas, la coiffe s'étend au-dessus du tableau de bord et éventuellement au-dessus d'une boîte à gants et/ou vide poche agencée à droite et/ou au-dessus d'une boîte à gants et/ou vide poche agencée à gauche.

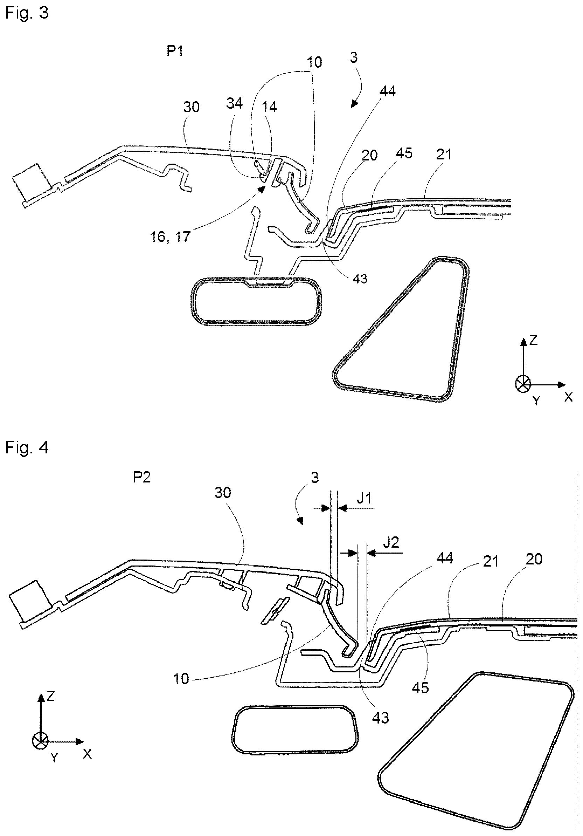

Comme illustré sur la figure 3 (section selon le plan P1 représenté sur la figure 7) et la figure 4 (section selon le plan P2 représenté sur la figure 7), la coiffe 20 comprend de préférence un revêtement ou peau 21. Une telle peau 21 est par exemple souple, par exemple de type cuir, simili cuir, tissu, textile, toile, ou autre.

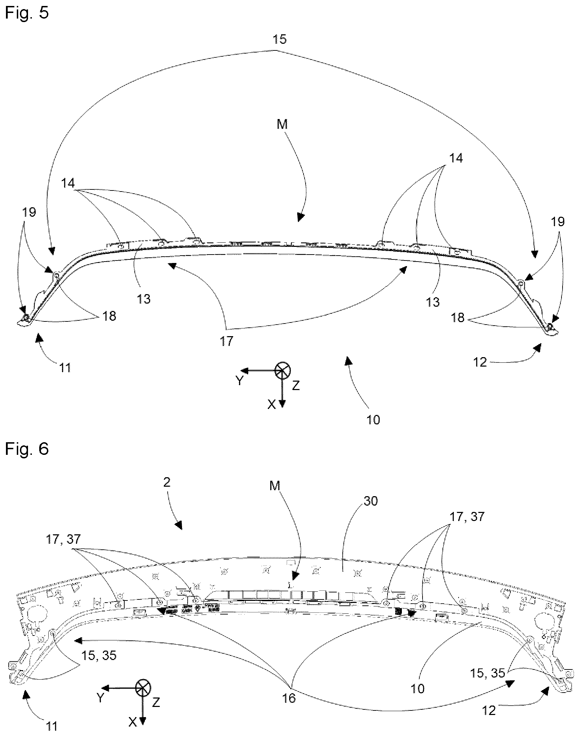

La planche de bord 3 comprend encore un agencement 2, illustré notamment sur la figure 6.

L'agencement 2 comprend un bandeau de coiffe 10, illustré notamment sur les figures 1 à 4. Par « bandeau de coiffe », on entend un habillage s'étendant d'un côté à l'autre de l'habitacle, devant la coiffe 20. La dimension du bandeau de coiffe selon la direction longitudinale du véhicule est relativement faible par rapport à sa dimension selon la direction transversale du véhicule. Par exemple, la dimension selon la direction transversale du bandeau de coiffe vaut de l'ordre de dix fois, vingt fois, trente fois, quarante fois, cinquante fois, soixante fois, voire soixante-dix fois la dimension selon la direction longitudinale. Par exemple, le bandeau de coiffe mesure, selon la direction transversale, entre 120 cm et 160 cm, par exemple de l'ordre de 140 cm. Par « d'un côté à l'autre », on entend que le bandeau de coiffe 10 s'étend sensiblement depuis la porte avant droite (en position fermée) jusqu'à la porte avant gauche (en position fermée). Plus précisément, de préférence, le bandeau de coiffe s'étend sensiblement depuis un bandeau de la porte avant gauche (non illustré) jusqu'à un bandeau 8 de la porte avant droite 4 (figure 2). Ainsi, par d'un côté à l'autre, on entend que le bandeau de coiffe occupe toute la dimension transversale de l'habitacle à ce niveau ou sensiblement à ce niveau.

Comme illustré sur la figure 5, le bandeau de coiffe 10 comprend une extrémité droite latérale 11 et une extrémité gauche latérale 12. Le bandeau de coiffe 10 comprend un milieu M selon la direction transversale du véhicule. Par exemple, le bandeau de coiffe est symétrique par rapport à un plan vertical et longitudinal passant par le milieu M, ou sensiblement par le milieu M. De préférence, la dimension du bandeau de coiffe selon la direction longitudinale est mesurée au niveau du milieu M.

L'agencement 2 comprend encore un plastron 30. Par « plastron », on entend un habillage s'étendant vers l'avant, sensiblement depuis le bandeau de coiffe 10. Un tel plastron s'étend de part et d'autre de l'habitacle, de gauche à droite, c'est-à-dire d'un côté à l'autre de l'habitacle, et jusqu'à la base avant d'un pare-brise 9. Ainsi, par d'un côté à l'autre, on entend que le plastron occupe toute la dimension transversale de l'habitacle à ce niveau ou sensiblement à ce niveau.

De préférence, le bandeau de coiffe 10 est monobloc. De préférence encore, le bandeau de coiffe 10 est élastiquement déformable. Par élastiquement déformable, on entend par exemple que le bandeau de coiffe est apte à retrouver sa forme et son intégrité initiales après avoir été soumis à une contrainte maximale de l'ordre de 50 MPa, par exemple de 47 MPa. Par exemple, une telle contrainte correspond, ou correspond sensiblement, à un allongement selon la longueur du bandeau de coiffe de l'ordre de 7 mm.

De préférence, le bandeau de coiffe comprend un moyen de fixation 16 sur le plastron 30.

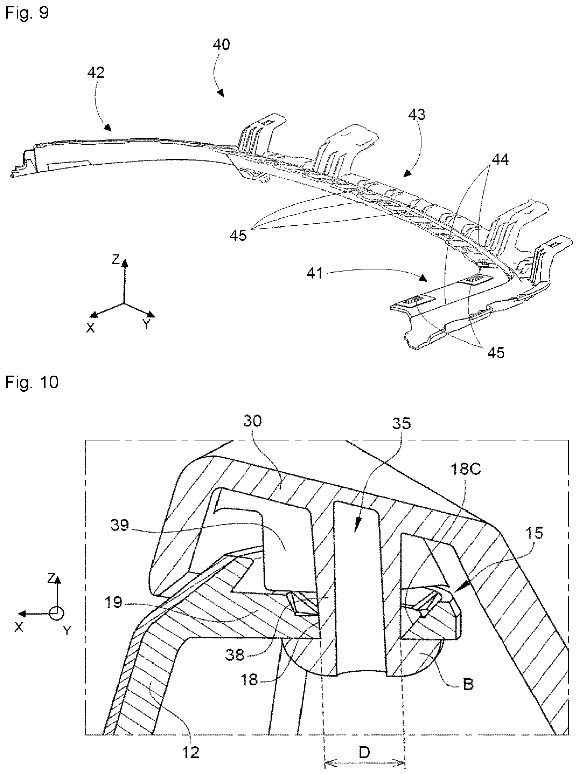

De préférence, le bandeau de coiffe 10 comprend un premier moyen de positionnement 15 par rapport au plastron 30. Le premier moyen de positionnement 15 est de préférence agencé au niveau de chaque extrémité latérale 11, 12 du bandeau de coiffe 10. De préférence, comme illustré sur la figure 10, le premier moyen de positionnement 15 comprend au moins un trou ou alésage 18 de diamètre D ménagé dans le bandeau de coiffe 10. Avantageusement, l'alésage 18 comprend un chanfrein 18C. De préférence, le bandeau de coiffe comprend au moins un alésage 18 au niveau de l'extrémité latérale 11 et au moins un alésage 18 au niveau de l'extrémité latérale 12. Avantageusement, comme illustré sur la figure 5, le bandeau de coiffe 10 comprend des oreilles ou extensions ou languettes 19 au niveau de chaque extrémité latérale 11, 12. Les alésages 18 sont ménagés au sein de ces oreilles 19. Avantageusement, le premier moyen de positionnement 15 comprend deux alésages 18 au sein de deux oreilles 19 au niveau de l'extrémité latérale droite 11 et deux alésages 18 au sein de deux oreilles 19 au niveau de l'extrémité latérale gauche 12. Alternativement, le premier moyen de positionnement 15 comprend un seul alésage au niveau de l'extrémité latérale droite et/ou un seul alésage au niveau de l'extrémité latérale gauche, ou au moins trois alésages au niveau de l'extrémité latérale droite et/ou au moins trois alésages au niveau de l'extrémité latérale gauche.

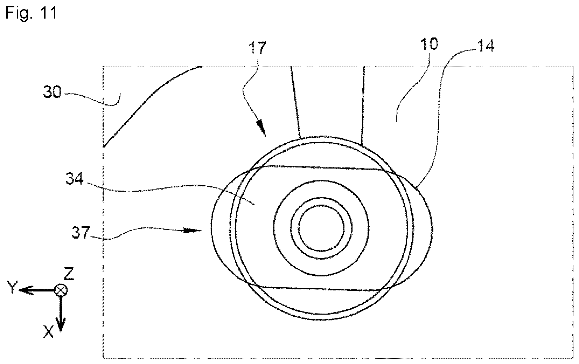

Avantageusement, le bandeau de coiffe 10 comprend un deuxième moyen de positionnement 17 par rapport au plastron 30. Le deuxième moyen de positionnement 17 est agencé de préférence de part et d'autre du centre M, ou sensiblement du centre M, du bandeau de coiffe 10. Le centre M est, ou est approximativement, la zone d'intersection entre un plan médian vertical et longitudinal du véhicule et le bandeau de coiffe. De préférence, comme illustré sur la figure 11, le deuxième moyen de positionnement 17 comprend au moins un trou oblong ou boutonnière 14 ou sensiblement oblong ménagé dans le bandeau de coiffe 10. De préférence, le bandeau de coiffe comprend au moins un trou oblong 14 agencé à droite du milieu M du bandeau de coiffe et au moins un trou oblong 14 agencé à gauche du milieu M, le bandeau s'étendant globalement de la gauche vers la droite ou vice versa. Avantageusement, comme illustré sur la figure 5, le bandeau de coiffe 10 comprend des languettes 13 s'étendant de préférence vers l'avant de part et d'autre du milieu M. Les trous oblongs 14 sont ménagés au sein de ces languettes 13. Avantageusement, le deuxième moyen de positionnement 17 comprend trois trous oblongs 14 à droite du milieu M et trois trous oblongs 14 à gauche du milieu M. Alternativement, le deuxième moyen de positionnement 17 comprend un ou deux trous oblongs à droite du milieu M et/ou un ou deux trous oblongs à gauche du milieu M, ou au moins quatre trous oblongs de part et d'autre du milieu du bandeau de coiffe.

Le plastron 30 comprend un premier moyen de coopération 35 apte à coopérer avec le premier moyen de positionnement 15 du bandeau de coiffe 10. Comme illustré sur la figure 10, le premier moyen de coopération 35 comprend un fût ou cylindre 38, par exemple creux, de préférence comprenant un épaulement ou nervure 39 à sa base. Le premier moyen de coopération comprend autant de fûts 38 que le premier moyen de positionnement 15 comprend d'alésages 18. Chaque fût 38 est destiné à venir s'insérer au sein de chaque alésage 18 correspondant au cours de l'assemblage du bandeau de coiffe sur le plastron qui sera décrit par la suite. De préférence, chaque fût 38 a un diamètre égal au diamètre D de l'alésage 18 correspondant, voire tout juste inférieur de sorte à permettre l'absence, ou sensiblement l'absence, de jeu entre chaque fût 38 et son alésage 18 correspondant.

De préférence, le plastron 30 comprend encore un deuxième moyen de coopération 37 apte à coopérer avec le deuxième moyen de positionnement 17. Comme illustré sur la figure 11, le deuxième moyen de coopération 37 comprend un fût ou cylindre 34, par exemple creux, de préférence comprenant un épaulement ou nervure à sa base. Le deuxième moyen de coopération comprend autant de fût 34 que le deuxième moyen de positionnement 17 comprend de trous oblongs 14. Chaque fût 34 est destiné à venir s'insérer au sein du trou oblong 14 correspondant au cours de l'assemblage du bandeau de coiffe sur le plastron qui sera décrit par la suite. De préférence, chaque fût 34 a un diamètre inférieur au petit diamètre du trou oblong 14 correspondant. Ainsi, des jeux, notamment selon les directions longitudinale et transversale, entre fûts 34 et trous oblongs 14 existent et permettent de positionner le bandeau de coiffe sur le plastron même au cas où les fûts 34 ne seraient pas centrés sur les trous oblongs 14. Autrement dit, les trous oblongs absorbent les déformations et/ou dispersions selon les directions X et Y. En outre, l'élasticité du bandeau de coiffe permet l'insertion des fûts 34 dans les trous oblong 14 malgré des dispersions sur le bandeau de coiffe par rapport aux emplacements des fûts du plastron.

De préférence, le moyen de fixation 16 du bandeau de coiffe sur le plastron comprend les premier et deuxième moyens de positionnement 15, 17 et/ou les premier et deuxième moyens de coopération 35, 37. Alternativement, le moyen de fixation est indépendant des premier et deuxième moyens de positionnement 15, 17 et/ou des premier et deuxième moyens de coopération 35, 37.

Comme illustré sur les figures 1 à 4, le bandeau de coiffe 10 s'étend, ou s'étend sensiblement, notamment selon la direction longitudinale, entre la coiffe 20 et le plastron 30. Par « entre », on entend que le bandeau de coiffe 10 comble au moins partiellement un écart s'étendant entre la coiffe 20 et le plastron 30.

Comme illustré sur les figures 3, 4, 8 et 9, la planche de bord 3 comprend encore un élément de maintien ou pince 40 de la peau 21 de la coiffe 20. L'élément de maintien 40 permet d'appuyer sur la peau 21. De préférence, l'élément de maintien 40 comprend une surface ou ligne d'appui 44 destinée à venir au contact de la peau 21 de la coiffe. De préférence, l'élément de maintien 40 est obtenu par moulage. Par exemple, l'élément de maintien comprend plusieurs portions 41, 42, 43 de sorte à satisfaire des contraintes de démoulage et/ou de géométrie. Dans ce cas, de préférence, la portion 42 est agencée à gauche, la portion 41 est agencée à droite, alors que la portion 43 est agencée entre les deux. Les portions sont fixées les unes aux autres de sorte à ne former ensuite qu'une seule pièce. Avantageusement, l'élément de maintien comprend des points ou patins de fixation 45 pour la fixation de l'élément de maintien sur la coiffe, notamment sous la coiffe. Par exemple, seize patins 45 sont répartis le long ou sensiblement le long de la ligne d'appui 44 de sorte à assurer un maintien optimal. Il en résulte un appui constant, ou sensiblement constant, tout le long de la ligne d'appui contre la peau 21 de la coiffe. De préférence, l'élément de maintien est en matière plastique. Par exemple, ces patins 45 sont fixés sur la coiffe via des vibrations qui engendrent la fusion des patins et de la coiffe et assurent une cohésion. Moins de patins 45, ou davantage de patins, peuvent également convenir.

Alternativement, l'élément de maintien peut ne comprendre qu'une seule pièce venue de moulage, ou comprendre deux portions, quatre portions ou davantage de portions assemblées.

Un mode d'exécution d'un procédé d'assemblage de l'agencement 2 va maintenant être décrit.

On procède à une étape de fourniture d'un bandeau de coiffe 10. On procède ensuite, ou simultanément, ou au préalable, à une étape de fourniture d'un plastron 30.

On procède ensuite à une étape de positionnement du bandeau de coiffe 10 par rapport au plastron 30 via le premier moyen de coopération 35 et le premier moyen de positionnement 15 au niveau d'une extrémité latérale puis au niveau de l'autre extrémité latérale du bandeau de coiffe. Alternativement, on procède au positionnement du bandeau de coiffe simultanément au niveau de l'extrémité droite latérale 11 et de l'extrémité latérale gauche 12. Comme évoqué précédemment, le premier moyen de positionnement 15 comprend des alésages 18 et le premier moyen de coopération 35 comprend des fûts 38. Ainsi, par positionnement, on entend insérer les alésages 18 sur les fûts 38. Pour rappel, un jeu faible voire nul est recherché entre les fûts et les alésages de sorte à positionner précisément les extrémités latérales 11, 12 par rapport au plastron. Cette étape est facilitée par la présence des chanfreins 18C au niveau des alésages 18 qui permettent de guider, centrer si besoin, chaque alésage 18 sur le fût 38 correspondant. A noter que les alésages 18 sont insérés sur les fûts 38 jusqu'au contact, ou sensiblement au contact, des oreilles 19 contre les épaulements 39 des fûts. Les épaulements 39 créent des butées selon la direction verticale ou sensiblement verticale.

On procède ensuite à une étape d'adaptation et/ou déformation du bandeau de coiffe 10 si besoin de sorte à positionner le bandeau de coiffe 10 par rapport au plastron 30 via le deuxième moyen de coopération 37 et le deuxième moyen de positionnement 17 de part et d'autre du centre M du bandeau de coiffe. Comme évoqué précédemment, le deuxième moyen de positionnement 17 comprend des trous oblongs 14 et le deuxième moyen de coopération 37 comprend des fûts 34. Ainsi, par positionnement, on entend insérer les trous oblongs 14 sur les fûts 34. Pour rappel, un jeu existe entre les fûts 34 et les trous oblongs 14 de sorte à faciliter l'insertion des trous oblongs sur les fûts, éventuellement sous contraintes d'étirements du bandeau de coiffe de sorte à faire coïncider fûts et trous oblongs correspondant. A noter que les trous oblongs 14 sont insérés sur les fûts 34 jusqu'au contact, ou sensiblement au contact, des languettes 13, éventuellement contre des épaulements ménagés à la base des fûts. De tels épaulements créent des butées selon la direction verticale ou sensiblement verticale.

On procède ensuite à une étape de fixation du bandeau de coiffe 10 sur le plastron 30, notamment par soudage. De préférence, les fûts 34, 38 sont bouterollés à chaud simultanément autour de leurs trous oblongs 14 et alésages 18 correspondant. Autrement dit, les extrémités des fûts sont chauffées simultanément tout en étant écrasées contre les languettes 13 et oreilles 19, de sorte à obtenir des bourrelets B comme illustré sur la figure 10. Alternativement, le bouterollage peut être effectué fût par fût et non simultanément. Alternativement encore, le bouterollage de certains fûts est réalisé simultanément.

Alternativement, un rivetage pourrait être utilisé, le bandeau de coiffe et le plastron étant alors percés aux lieux et places des fûts et alésages, boutonnières. D'autres moyen de maintien du bandeau de coiffe sur le plastron peuvent convenir, notamment par l'intermédiaire de clips.

En résumé, le bandeau de coiffe est bridé aux extrémités pour un accostage parfait avec les bandeaux décors des portes avant grâce à l'absence de jeu entre les fûts 38 et alésages 18. Le bandeau de coiffe est déformé au milieu, ou sensiblement au milieu, notamment au niveau du deuxième moyen de positionnement 17, pour absorber les dispersions de longueur avant soudure sur le plastron.

Grâce à la solution, bien que le bandeau de coiffe s'étende sur une grande longueur selon la direction transversale du véhicule tout en présentant un arc, il est en une seule pièce. Ainsi, aucune jonction, notamment au niveau du centre, n'est visible pour le conducteur et/ou le passager. Malgré les éventuelles dispersions issues de la fabrication du bandeau de coiffe, en particulier dues à sa longueur, les premier et deuxième moyens de positionnement assurent un emplacement précis par rapport au plastron. En outre, l'absence de jeu aux extrémités latérales 11, 12 entre le bandeau de coiffe et le plastron entre les fûts 38 et les alésages 18 permettent un ajustage précis par rapport aux bandeaux de portes 8 adjacents. Il s'ensuit une continuité esthétique entre le bandeau de coiffe et les bandeaux de portes, gage de qualité perçue pour le client et/ou l'utilisateur du véhicule.

A noter qu'un jeu J1 longitudinal, ou sensiblement longitudinal, est prévu entre le bandeau de coiffe et le plastron (figure 4) de sorte à permettre des dispersions conséquentes du bandeau de coiffe sans qu'il soit contraint par un contact contre le plastron. Un jeu J2 longitudinal, ou sensiblement longitudinal, est également prévu entre le bandeau de coiffe et la coiffe 20 ou la pince 40 (figure 4). Là encore, ce jeu autorise des dispersions du bandeau de coiffe sans le contraindre par un contact contre la pince et/ou la coiffe. A noter que ces jeux J1, J2 sont agencés de sorte à être invisibles, ou sensiblement invisibles, pour le conducteur et/ou le passager assis dans leur siège respectif.

Ainsi, le bandeau de coiffe ne subit aucune contrainte autre que ses points de fixation avec le plastron ce qui lui permet de prendre une forme continue sur toute sa longueur s'étendant de part et d'autre de l'habitacle, sans creux ou pli ou bosse au niveau du milieu M. Là encore, l'esthétique est optimale et gage de qualité perçue pour le client et/ou l'utilisateur du véhicule.

Grâce à la pince 40 le maintien de la peau 21 de la coiffe est assuré sur la coiffe au niveau de la ligne d'appui 44 (bord avant de la coiffe) malgré l'absence de contact entre le bandeau de coiffe et la coiffe et le fait que le bandeau de coiffe soit déformable et par conséquent relativement souple. Il en résulte une absence de décollement ou « déplaquage » de la peau 21 au fil du temps.

Grâce à la fixation par bouterollage, le bandeau de coiffe est fixé solidement au plastron ce qui est recherché pour éviter toute séparation en cas de déclanchement d'un airbag, notamment au niveau de la boîte à gants 7.

Eventuellement, à des fins esthétiques, le bandeau de coiffe est peint, ou recouverte, gainée d'une peau ou d'un décor, voire couverte d'un plaquage bois.

En remarque, la solution atteint donc l'objectif recherché de fournir un bandeau de coiffe ayant une continuité sur toute sa longueur tout en assurant un ajustement parfait avec les bandeaux des portes, et présente les avantages suivants :
- elle est relativement économique et ne fait appel qu'à des techniques couramment utilisées dans l'industrie automobile,
- elle peut être utilisée sur d'autres véhicules de sorte à améliorer l'esthétique de pièces visibles au sein de leur habitacle.

## Revendications

1. Bandeau de coiffe (10) pour véhicule, notamment pour véhicule automobile (1), destiné à s'étendre d'un côté à l'autre de l'habitacle d'un tel véhicule entre une coiffe (20) et un plastron (30), **caractérisé en ce que** le bandeau de coiffe (10) est monobloc.

2. Bandeau de coiffe (10) selon la revendication précédente, **caractérisé en ce que** le bandeau de coiffe (10) est élastiquement déformable.

3. Bandeau de coiffe (10) selon l'une des revendications précédentes, **caractérisé en ce que** le bandeau de coiffe (10) comprend un moyen de fixation (16) sur un tel plastron (30).

4. Bandeau de coiffe (10) selon l'une des revendications précédentes, **caractérisé en ce que** le bandeau de coiffe (10) comprend un premier moyen de positionnement (15) par rapport à un tel plastron (30), notamment au niveau de chaque extrémité latérale (11, 12) du bandeau de coiffe (10), et un deuxième moyen de positionnement (17) par rapport à un tel plastron (30), notamment de part et d'autre du centre (M) ou sensiblement du centre (M) du bandeau de coiffe (10).

5. Agencement (2) comprenant un bandeau de coiffe (10) selon la revendication précédente, **caractérisé en ce que** l'agencement (2) comprend un plastron (30) comprenant un premier moyen de coopération (35) avec le premier moyen de positionnement (15) et un deuxième moyen de coopération (37) avec le deuxième moyen de positionnement (17).

6. Planche de bord (3) pour habitacle de véhicule, notamment de véhicule automobile (1), comprenant :
- une coiffe (20),
- un agencement (2) selon la revendication précédente,
**caractérisée en ce que** le bandeau de coiffe (10) s'étend, ou s'étend sensiblement, entre la coiffe (20) et le plastron (30).

7. Planche de bord (3) selon la revendication précédente, **caractérisé en ce que** la coiffe (20) est revêtue d'une peau (21).

8. Planche de bord (3) selon la revendication précédente, **caractérisé en ce que** la planche de bord (3) comprend un élément de maintien (40) de la peau (21) de la coiffe (20) de sorte à appuyer sur la peau (21).

9. Planche de bord (3) selon la revendication précédente, **caractérisé en ce que** l'élément de maintien (40) est obtenu par moulage, notamment par moulage de plusieurs portions (41, 42, 43) suivi de la fixation des portions (41, 42, 43) ensemble.

10. Véhicule, notamment véhicule automobile (1), **caractérisé en ce qu'**il comprend un bandeau de coiffe (10) selon l'une des revendications 1 à 4, ou un agencement (2) selon la revendication 5, ou une planche de bord (3) selon l'une des revendications 6 à 9.

11. Procédé d'assemblage d'un agencement (2) selon la revendication 5, **caractérisé en ce qu'**il comprend :
- une étape de fourniture d'un bandeau de coiffe (10),
- une étape de fourniture d'un plastron (30),
- une étape de positionnement du bandeau de coiffe (10) par rapport au plastron (30) via le premier moyen de coopération (35) et le premier moyen de positionnement (15) au niveau de chaque extrémité (11, 12) du bandeau de coiffe (10),
- une étape de déformation du bandeau de coiffe (10) de sorte à positionner le bandeau de coiffe (10) par rapport au plastron (30) via le deuxième moyen de coopération (37) et le deuxième moyen de positionnement (17) de part et d'autre du centre (M) ou sensiblement du centre (M) du bandeau de coiffe (10),
- une étape de fixation du bandeau de coiffe (10) sur le plastron (30), notamment par rivetage, notamment par bouterollage à chaud.

## Patentansprüche

1. Abdeckleiste (10) für ein Fahrzeug, insbesondere für ein Kraftfahrzeug (1), die dazu bestimmt ist, sich von einer Seite zur anderen des Innenraums eines solchen Fahrzeugs zwischen einer Abdeckung (20) und einer Blende (30) zu erstrecken, **dadurch gekennzeichnet, dass** die Abdeckleiste (10) einteilig ist.

2. Abdeckleiste (10) nach dem vorhergehenden Anspruch, **dadurch gekennzeichnet, dass** die Abdeckleiste (10) elastisch verformbar ist.

3. Abdeckleiste (10) nach einem der vorhergehenden Ansprüche, **dadurch gekennzeichnet, dass** die Abdeckleiste (10) ein Mittel zur Befestigung (16) an einer solchen Blende (30) umfasst.

4. Abdeckleiste (10) nach einem der vorhergehenden Ansprüche, **dadurch gekennzeichnet, dass** die Abdeckleiste (10) ein erstes Mittel zur Positionierung (15) in Bezug auf eine solche Blende (30) umfasst, insbesondere an jedem seitlichen Ende (11, 12) der Abdeckleiste (10), und ein zweites Mittel zur Positionierung (17) in Bezug auf eine solche Blende (30), insbesondere beidseits der Mitte (M) oder im Wesentlichen der Mitte (M) der Abdeckleiste (10) .

5. Anordnung (2), die eine Abdeckleiste (10) nach dem vorhergehenden Anspruch umfasst, **dadurch gekennzeichnet, dass** die Anordnung (2) eine Blende (30) umfasst, die ein erstes Mittel zum Zusammenwirken (35) mit dem ersten Mittel zur Positionierung (15) und ein zweites Mittel zum Zusammenwirken (37) mit dem zweiten Mittel zur Positionierung (17) umfasst.

6. Armaturenbrett (3) für einen Innenraum eines Fahrzeugs, insbesondere eines Kraftfahrzeugs (1), umfassend:
- eine Abdeckung (20),
- eine Anordnung (2) nach dem vorhergehenden Anspruch, **dadurch gekennzeichnet, dass** sich die Abdeckleiste (10) zwischen oder im Wesentlichen zwischen der Abdeckung (20) und der Blende (30) erstreckt.

7. Armaturenbrett (3) nach dem vorhergehenden Anspruch, **dadurch gekennzeichnet, dass** die Abdeckung (20) mit einer Haut (21) überzogen ist.

8. Armaturenbrett (3) nach dem vorhergehenden Anspruch, **dadurch gekennzeichnet, dass** das Armaturenbrett (3) ein Element zum Halten (40) der Haut (21) der Abdeckung (20) umfasst, so dass es auf die Haut (21) drückt.

9. Armaturenbrett (3) nach dem vorhergehenden Anspruch, **dadurch gekennzeichnet, dass** das Element zum Halten (40) durch Spritzgießen erhalten wird, insbesondere durch Spritzgießen von mehreren Abschnitten (41, 42, 43), gefolgt von dem Befestigen der Abschnitte (41, 42, 43) aneinander.

10. Fahrzeug, insbesondere Kraftfahrzeug (1), **dadurch gekennzeichnet, dass** es eine Abdeckleiste (10) nach einem der Ansprüche 1 bis 4 oder eine Anordnung (2) nach Anspruch 5 oder ein Armaturenbrett (3) nach einem der Ansprüche 6 bis 9 umfasst.

11. Verfahren zur Montage einer Anordnung (2) nach Anspruch 5, **dadurch gekennzeichnet, dass** es umfasst:
- einen Schritt des Bereitstellens einer Abdeckleiste (10),
- einen Schritt des Bereitstellens einer Blende (30),
- einen Schritt des Positionierens der Abdeckleiste (10) in Bezug auf die Blende (30) über das erste Mittel zum Zusammenwirken (35) und das erste Mittel zur Positionierung (15) an jedem Ende (11, 12) der Abdeckleiste (10),
- einen Schritt des Verformens der Abdeckleiste (10), so dass die Abdeckleiste (10) in Bezug auf die Blende (30) über das zweite Mittel zum Zusammenwirken (37) und das zweite Mittel zur Positionierung (17) beidseits der Mitte (M) oder im Wesentlichen der Mitte (M) der Abdeckleiste (10) positioniert wird,
- einen Schritt des Befestigens der Abdeckleiste (10) an der Blende (30), insbesondere durch Nieten, insbesondere durch Heißverstemmen.

## Claims

1. Cowl strip (10) for a vehicle, notably for a motor vehicle (1), intended to extend from one side of the passenger compartment of such a vehicle to the other between a cowl (20) and an apron (30), **characterized in that** the cowl strip (10) is in one piece.

2. Cowl strip (10) according to the preceding claim, **characterized in that** the cowl strip (10) is elastically deformable.

3. Cowl strip (10) according to either of the preceding claims, **characterized in that** the cowl strip (10) comprises a fastening means (16) for fastening to such an apron (30).

4. Cowl strip (10) according to one of the preceding claims, **characterized in that** the cowl strip (10) comprises a first positioning means (15) for positioning relative to such an apron (30), notably at each lateral end (11, 12) of the cowl strip (10), and a second positioning means (17) for positioning relative to such an apron (30), notably on either side of the centre (M) or substantially in the centre (M) of the cowl strip (10).

5. Arrangement (2) comprising a cowl strip (10) according to the preceding claim, **characterized in that** the arrangement (2) comprises an apron (30) comprising a first engagement means (35) for engaging with the first positioning means (15) and a second engagement means (37) for engaging with the second positioning means (17).

6. Dashboard (3) for a passenger compartment of a vehicle, notably a motor vehicle (1), comprising:
- a cowl (20),
- an arrangement (2) according to the preceding claim, **characterized in that** the cowl strip (10) extends, or substantially extends, between the cowl (20) and the apron (30).

7. Dashboard (3) according to the preceding claim, **characterized in that** the cowl (20) is covered with a skin (21).

8. Dashboard (3) according to the preceding claim, **characterized in that** the dashboard (3) comprises a retaining element (40) for retaining the skin (21) of the cowl (20) in such a way as to press on the skin (21).

9. Dashboard (3) according to the preceding claim, **characterized in that** the retaining element (40) is obtained by moulding, notably by moulding of multiple segments (41, 42, 43) followed by fastening the segments (41, 42, 43) together.

10. Vehicle, notably motor vehicle (1), **characterized in that** it comprises a cowl strip (10) according to one of Claims 1 to 4, or an arrangement (2) according to Claim 5, or a dashboard (3) according to one of Claims 6 to 9.

11. Method for assembling an arrangement (2) according to Claim 5, **characterized in that** it comprises:
- a step of supplying a cowl strip (10),
- a step of supplying an apron (30),
- a step of positioning the cowl strip (10) relative to the apron (30) via the first engagement means (35) and the first positioning means (15) at each end (11, 12) of the cowl strip (10),
- a step of deforming the cowl strip (10) in such a way as to position the cowl strip (10) relative to the apron (30) via the second engagement means (37) and the second positioning means (17) on either side of the centre (M) or substantially in the centre (M) of the cowl strip (10),
- a step of fastening the cowl strip (10) to the apron (30), notably by riveting, notably by hot rivet-heading.
